# EUROPEAN PATENT APPLICATION

(11) **EP 2 360 893 A1**
(43) Date of publication of application: **24.08.2011**
(21) Application number: 10305154.6
(22) Date of filing: 16.02.2010
(51) Int. Cl.: H04L 29/12

(54) **A method, a system and devices for locating a representation in a communications network**

(71) Applicant: Alcatel Lucent, 75008 Paris (FR)
(72) Inventor: Blommaert, Pieter, 2000 Antwerp (BE); Lou, Zhe, 2000 Antwerp (BE)
(74) Representative: Brose, Gerhard

(57) **Abstract**

The invention concerns a method for locating a representation, in particular representing a user of a service in a communications network, wherein a correlation- between an identification, in particular uniquely identifying said user, and a locator, in particular identifying a storage location providing said representation, is determined and said representation is located depending on said locator.

## Description

### Field of the invention

The invention relates to a method, a system, a server, a proxy server, a client, a computer program and a computer program product for locating a representation in a communications network.

### Background

In communications networks users of applications are identifield by this applications using symbolic representations of users. Such representations are for example Unicode strings of user names, a-mail addresses or internet relay chat nicknames.

For sending e-mails, current personal computers run e-mail applications which store e-mail addresses of addressees associated with their real life name in an address book. In order to write an e-mail an addressee's e-mail address typically can be entered via a graphical user interface of the application. Many e-mail applications are adapted to process an addressee's real life name as well. In this case the e-mail is addressed to the e-mail address that is associated to the real life name in the address book.

However, if the symbolic representations, e.g. the e-mail address of a user, change, the association of user name and representation, e.g. the real life name of the user and the e-mail address, is void.

### Summary

The object of the invention is thus to provide an application with the most up to date information of representations of a user.

The main idea of the invention is to locate a representation, in particular representing a user of a service in a communications network, **wherein** a correlation between an identification, in particular uniquely identifying said user, and a locator, in particular identifying a storage location providing said representation, is determined and said representation is located depending on said locator. This way the most up to date representation of a user identified by said identification is made available to an application.

Advantageously a first message containing said user identification is received, in particular by a first proxy server from a client, and a second message containing a result of said cor relation is sent, in particular by said first proxy server to said client. This reduces the load on said server and allows quicker response times.

Advantageously said first message is forwarded, in particular to a second proxy server, as a third message in case no correlation is found, in particular on said first proxy server, This way fewer correlations between identifications and locators need to be stored on a single proxy server. This reduces the hardware requirement and hence the cost of individual servers.

Advantageously a fifth message containing said identifica-Lion, in particular a request to register a new identification, is received, in particular by said server from said client, and a sixth message, in particular a request to verify said identification, is sent by said server to said first proxy server. This reduces the risk of a new identifications being ambiguously defined when registered with said server.

Further developments of the invention can be gathered from dependent claims and the following description.

### Brief description of the figures

In the following the invention will be explained further making reference to the attached drawings.
Fig. 1 schematically shows a first part of a communications network.
Fig. 2 schematically shows a first sequence diagram.
Fig, 3 schematically shows a second part of said communications network.
Fig. 4 schematically shows a second sequence diagram.
Fig. 5 schematically shows a third part of said communications network.
Fig. 6 schematically shows a third sequence diagram.
Fig. 7 schematically shows a fourth part of said communications network.
Fig. 8 schematically shows a fourth sequence diagram.
Fig. 9 schematically shows a fifth sequence diagram.

### Description of the embodiments

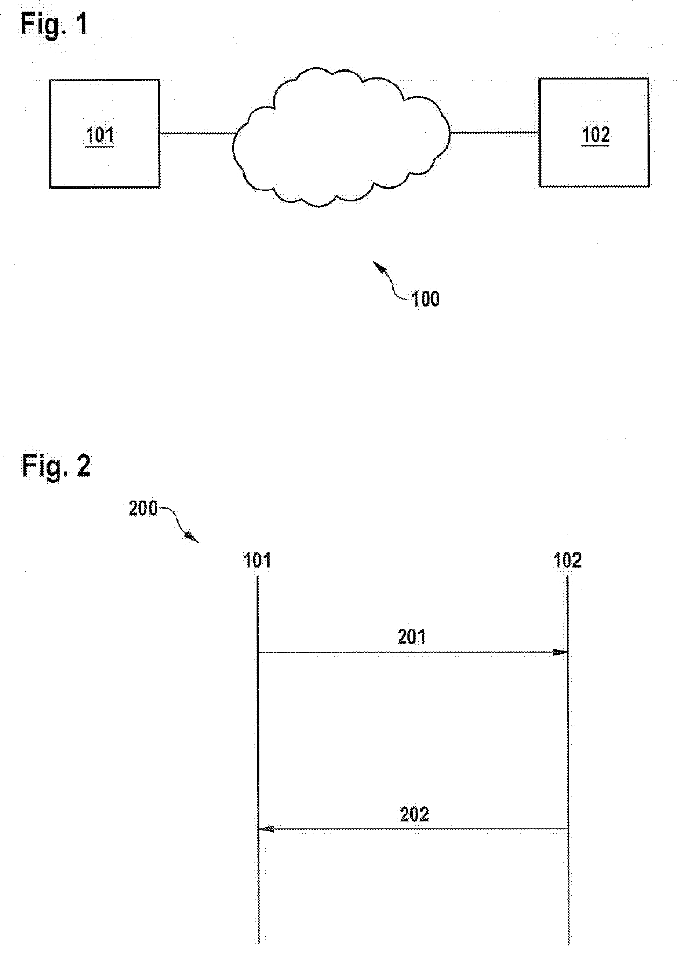

Fig. 1 schematically shows a first part of a communications network 100. Said communications network 100 comprises a client 101 and a first proxy server 102. Said client 101 and said first proxy server 102 are connected via a data link for example according to the well known Internet Protocol Multimedia Subsystem.

Said communications network 100 may also comprise of any other type of fixed line or wireless data link.

Said client 101 is for example a personal computer. Said client 101 may also be any other type of computer, like a web mail server.

Said first proxy server 102, e.g. a first personality identification server, stores pairs of identifications and locators. An identification uniquely identifier a user of a service in said communications network 100 and a locator of a representation provides a storage location of a representation of said user.

Said identification, e.g. a global personality identification, is stored as a Unicode string of for example a maximum length of 50 characters.

Said identification is for example a real life name of said user. Said identification may as well be a numeric identification of said user, e.g, a social security number.

Said locator is for example a Uniform Resource Locator, specifying where said representation is available in said communications network 100. Said may as well be a numeric identification, e.g. an protocol address and port number.

A first method for locating said representation, in particular representing said user of said service in said communications network 100 is described below making reference to a first sequence diagram depicted in Fig. 2.

Said method for example starts whenever an application, e.g. an e-mail application, running on said client 101 needs to locate said representation, e.g, said e-mail address, corresponding to said identification, e.g. said real life name, in said communications network 100.

Alternatively, said representation representing said user may be any other type of representation depending on the service used. For example, said representation may be a nickname of said user in an Internet Relay Chat client.

After the start of said first method, said client 101 sends a first message 201, Request, containing said identification to said first proxy server 102. Said first message 201 may contain an indication of the type of request, e.g. a flag indicating that said locator matching said identification is requested.

Said first message 201 and all other messages described below are assembled and sent using methods well known to a person skilled in the art, e.g. according to the internet protocol standard.

Upon receipt of said first message 201, said first proxy server 102 sends a second message 202, Response, containing a result of a correlation between said identification and said locator specifying where said representation is available.

Said correlation between said identification and said locator is for example found via a search in a look-up table, containinq said pairs of identifications and locators. In the case that no locator or no identification is found in said look-up table, said second message 202 is determined as a first error message, containing for example a string "No locator found".

In case a locator matching said identification is found, said second message 202 contains tor example said uniform Resource Locator. Alternatively, instead of using said Uniform Resource Locator, said Internet Protocol address and port number may be used.

Upon receipt of said second message 202, said client 101 determines whether said second message 202 contains said locator or said first error message.

In case said error message was received, said client 101 displays said error message and the first message ends.

Otherwise said client 101 locates said representation depending on said locator received in said second message 202, e.g. by downloading said representation from said storage location.

Additionally, said first method may include additional escalation steps that execute in case said identification received in said first message 201 is not found in any of said pairs of identifications and locations on said first proxy server 102

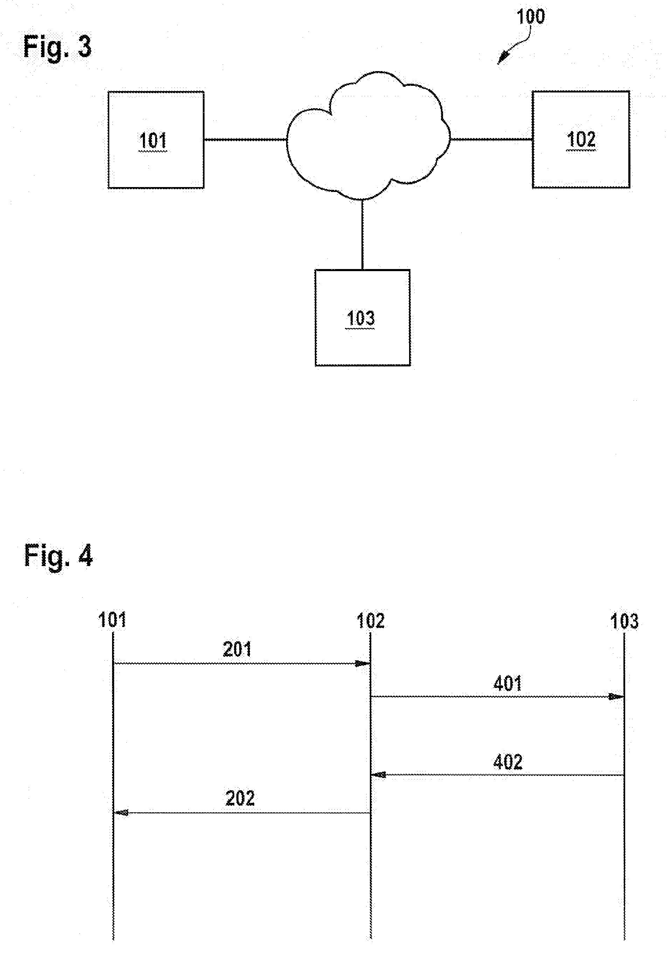

Said additional steps are now explained, making reference to figures 3 and 4.

Fig. 3 shows a second part of said communications network 100, comprising said client 101, said first proxy server 102 and a second proxy server 103.

Said first proxy server 102, said second proxy server 103 and said client 101 are connected by said data link as described in Fig. 1 above.

Said second proxy server 103, e.g. a second personality identification server, stores pairs of identifications and locators.

Said first proxy server 102 is adapted to store said pairs of identifications and locators for example for a first predetermined period of time, e.g. for two hours.

Said second proxy server 103 is adapted to store said pairs of identifications and locators for example until a first condition is met, e.g. as long as the respective identification or locator exists.

Said first proxy server 102 is adapted to receive said pairs of identifications and locators from said second proxy server 103.

Said second proxy server 103 is adapted to receive said pairs of identification and locator, for example as an announce message sent to said second proxy server 103 as soon as a new pair of identification and locator is available.

Fig. 4 schematically shows a second sequence diagram depicting a communication between said client 101, said first proxy server 102 and said second proxy server 103.

Said first message 201 is sent from said client 101 to said first proxy server 102 as described in said first sequence diagram in Fig. 2.

Upon receipt of said first message 201 said first proxy server 102 looks up said identification,

In case said locator matching said identification is found on said first proxy server 102 said method continues as described in the sequence diagram of Fig. 2.

In case the identification could not be found on said first proxy server 102 said first proxy server 102 sends a third message 401, Request, to said second proxy server 103. Said third message 401 is for example a copy of said first message 201.

Upon receipt of said third message 401, said second proxy server 103 determines a correlation between said identification received in said third message 401 and the locators stored on said second proxy server 103.

The result of said correlation is sent from said second proxy server 103 to said first proxy server 102 as a fourth message 402, Response, containing the result of said correlation.

In case said locator correlating to said identification is found on said second proxy server 103, said fourth message 402 contains for example said Uniform Resource Locator. Otherwise said fourth message 402 contains for example said first error message indicating that no locator has been found on said second proxy server 103.

Upon receipt of said fourth message 402, said first proxy server 102 forwards said fourth message 402 as said second message 202 to said client 101. Afterwards, said method ends.

Additionally, said first proxy server 102 may be adapted to cache said locator and said identification for example for said first predetermined period of time.

Additionally, said client 101 may be adapted to cache said locator, said identification or any data retrieved from the system, for example until said locator or said data are found to be invalid.

Additionally, said communications network 100 may comprise one or more third proxy servers, not depicted in figure 3, that store said pairs of identifications and locators, e.g. tor a second predetermined period of time, e.g. two hours.

This way said third proxy servers or said second proxy server 102 may be adapted to cache pairs of identifications and locators before passing them on to said client 101. This way requests for locators may be answered by said third proxy server without contacting said second proxy server 102 or by said second proxy server 102 without contacting said first proxy server 103.

Said communications network 100 may also comprise more than one first proxy server 102. In this case, said first proxy servers 102 are set up to accept only requests from predetermined third proxy servers.

In this case, said second proxy servers 103 are adapted to accept all requests from all first proxy servers 102 and adapted to optionally accept requests from any third proxy servers as well.

Additionally, said third proxy servers may be adapted to accept requests of clients only if they are in a certain sub-network of said communications network 100. This way, the amount of clients that may send requests to said thirds proxy servers is limited and said third proxy servers can be built with less hardware requirements and cost.

Alternatively or additionally multiple second proxy servers 103 may be included in said communications network 100. In this case, said multiple second proxy servers 103 may be adapted to frequently replicate pairs of identification and locator. This way, said communications network 100 comprises of redundant second proxy servers 103 that increase the reliability of the service.

Alternatively or additionally multiple first proxy servers 102 may be included in said communications network. 100. In this case, said multiple first proxy servers 102 may also be adapted to offer e.g. access redundancy and/or further caching hierarchy for load distribution or commercial purposes.

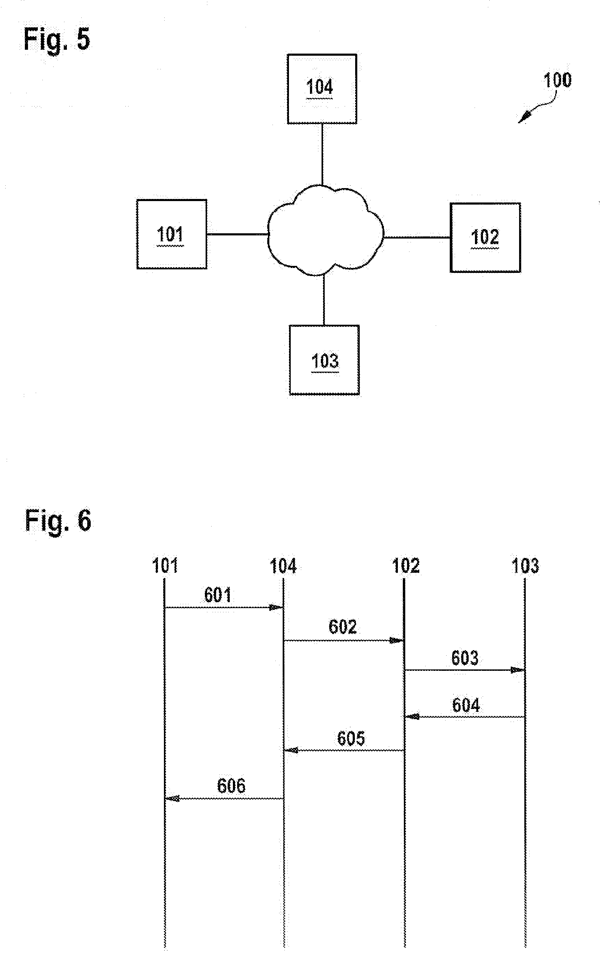

Fig. 5 schematically shows a third part of said communications network 100. Said third part of said communications network 100 comprises said client 101, said second proxy server 103 and a server 104.

Said server 104 said first proxy server 102, said second proxy server 103 and said client 101 are connected via said data link, for example according to said Internet Protocol Multimedia Subsystem.

Said server 104 is adapted to provide access to said storage location, e.g. via said uniform resource locator or said internet protocol address and port number.

Said server is adapted to provide said representation to said client 101, e.g. by allowing said client to download said representation from said storage location.

Additionally said server 104 is adapted to validate and store new identifications and representations and optionally additional information like public certificates.

The goal of a second method for locating said representation is to register a new identification with said server 104. Said second method is described below making reference to a third sequence diagram depicted in figure 6.

To request a new identification to be registered with said server 104, said client 101 sends a fifth message 601, request, to said server 104. Said fifth message 601 contains said new identification, for example a Unicode string, containing the real life name of said user.

Upon receipt of said fifth message 601, said server 104 sends a sixth message 602, Request, to said first proxy server 102. Said sixth message 602 contains said new identification, for example said Unicode string.

Upon receipt of said sixth message 602, said first proxy server 102 looks up said new identification in all of said pairs of identifications and locators stored on said first proxy server 102.

In case said new identification was not found in any of the pairs of identifications and locators stored on said first proxy server 102, said first proxy server 102 forwards said sixth message 602 as a seventh message 603, Request, to said second proxy server 103.

In this case, said second proxy server 103 determines whether said new identification can be found in any of the pairs of identifications and locators stored on said second proxy server 103 and returns the result of that determination in an eighth message 604, Response, to said first proxy server 102. If the new identification was not found, it will also add it now, together with its locator.

Said first proxy server 102 is adapted to determine and send a ninth message 605, Response, to said server 104.

Additionally, said proxy server 102 may be adapted to cache the new identification and locator pair at this time, in case the new identification was not found. This means that said new identification and locator pair is accepted.

Said ninth message 605 is determined to indicate that said new identification was not found in case no identification matching said new identification was found on said first proxy server 102 and, if applicable, said seventh message 604 indicated that no identification matching said new identification was found on said second proxy server 103. Otherwise said ninth message 605 is determined to indicate that said new identification has been found.

Upon receipt of said message 605, said server 104 determines whether new identification has been found or not. In case that new identification has not been found, said server 104 stores said new identification and determines a tenth message 606, Response, indicating a successful creation of a new identification. Otherwise, said server 104 determines said tenth message 606 to indicate that the creation of said new identification has failed. Afterwards the method ends.

Said tenth message 606 may be sent to said client 101, said first proxy server 102, said second proxy server 103 or said third proxy server.

Additionally, said first proxy server 102 or said second proxy server 103 may be adapted to upon receipt of said tenth message 606, cache said new identification in case no matching identification was found in any pair of identification and locator stored on said first proxy server 102 and said second proxy server 103.

Additionally or alternatively, said server 104 may send said sixth message 602 to said second proxy server 103 directly.

Additionally or alternatively, said first proxy server 102 may send said seventh message 603 to multiple second proxy servers 103.

Additionally or alternatively, said second proxy server 103 may send an eleventh message requesting verification of said new identification to one or more other second proxy servers 103 in said communications network 100.

In any of the alternatives mentioned above, the respective server may be adapted to wait for the response to a verification request sent to any other server before determining whether said new identification can be accepted or not.

Additionally or alternatively, said servers may be adapted to wait only a certain amount of time for a response to a verification request sent out before determining whether said new identification can be accepted or not.

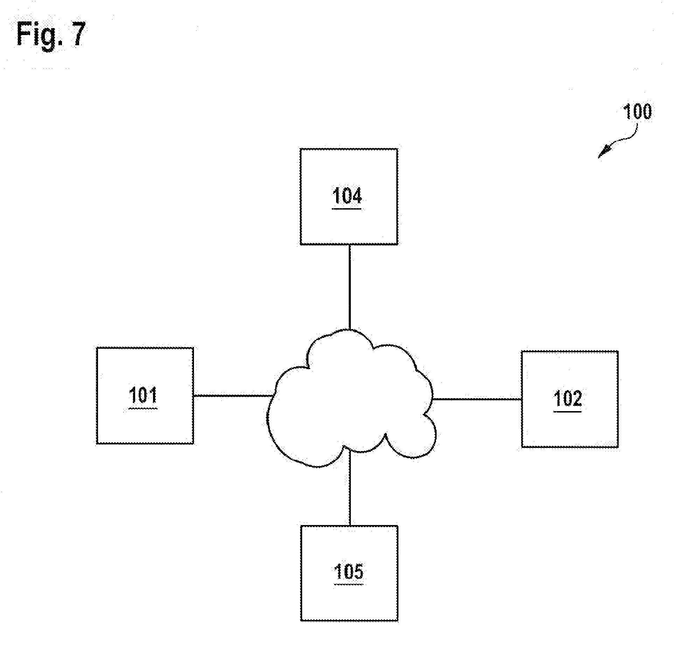

Fig. 7 schematically describes a fourth part of said communications network 100 comprising said client 101, said first proxy server 102, said server 104 and an application server 105.

Said application server 105 is for example a mail server.

Said client 101 could be a web-based application server instead of a personal computer as well.

Said client 101, said first proxy server 102, said server 104 and said application server 105 are connected via said data link.

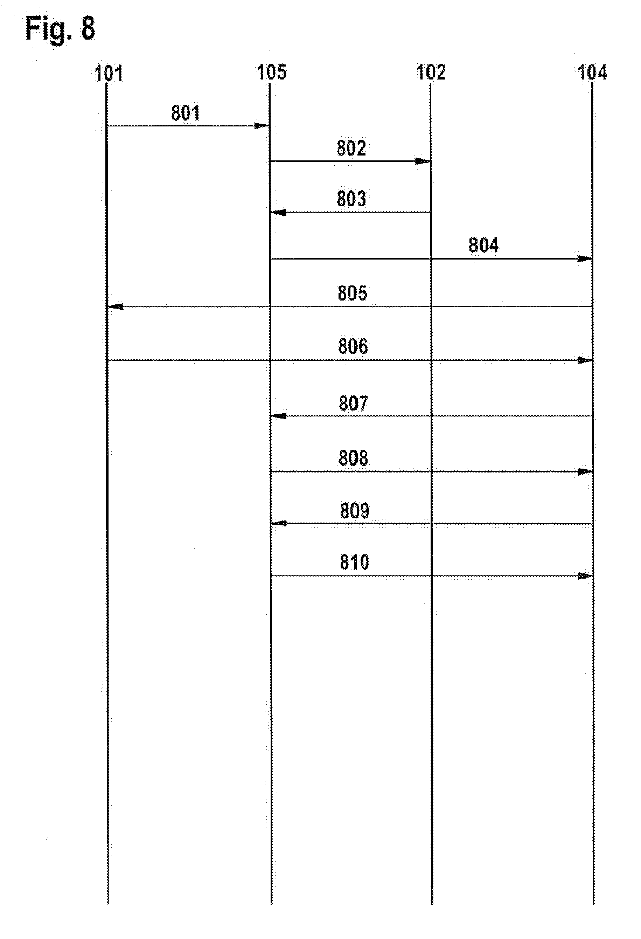

Fig. 8 schematically shows a fourth sequence diagram for additional steps in said second method that enable a user of an application, for example an email application to set up an account, for example a new email account.

Said user of said service has already set up an identification and registered it with said server 104. To set up a new representation of his identification in said application server 105, said user for example uses a personal computer or a web application server to request a new account.

To that end said client 101 for example hosts an application with a graphical user interface, that allow said user to input said new email address and his or her identification, for example his or her real life name.

Upon receipt of the input from said user, said client 101 sends a message 801, Request, requesting said new email address to be stored in said application server 105. Said message 801 comprises said new email address for example as a string, said identification, for example said Unicode string and said client's address, for example an Internet Protocol address of said client 101.

Upon receipt of said message 801, said application server 105 sends a message 802, Request, for requesting said locator matching said identification to said first proxy server 102. Said message 802 contains said identification, for example said Unicode string and said client's address.

Upon receipt of said message 802, said first proxy server 102 looks up said locator matching said identification. In case a locator is found, said first proxy server 102 sends a message 803, Response, containing the locator, for example said Uniform Resource Locator to said application server 105. In case no matching locator is found for said identification on said first proxy server 102, said proxy server 102 sends said first error message as a message 803, indicating that no locator could be found.

Additionally said first proxy server 102 may send one or more messages to one or more other proxy servers to request said 1o-cator matching said identification from them.

Upon receipt of said message 803, said application server 105 determines whether said locator has been found or not.

In case no locator has been found or message 803 has not been received, for example within a third predetermined amount of time, e.g. 1 minute, said application 105 drops the request for a new email account. In this case, the method ends.

In case a locator has been received in message 803, said application server 105 sends a message 804, Request, to said server 104, Said message 803 contains a request to log-in to said server 104. Said message 804 contains for example said identification and said client's address.

Upon receipt of said message 804, said server 104 sends a message 805, Request, requesting log-in data from said user to said client 101.

Upon receipt of said message 805, said client 101 displays said request for log-in data to said user via said graphical user interface.

Upon receipt of input from said user, said client 101 sends a message 806, Response, containing said log-in data, for example a password of said user to said server 104.

Said message 805 and said message 806 may be encrypted with an encryption like the well known SSL-encryption.

Upon receipt of said message 806, said server 104 authenticates said log-in, using said log-in data.

In case of successful authentication said server 104 sends a message 807, Response, indicating that log-in was successful to said application server 105. In case said log-in was not authenticated successfully, said server 104 sends said message 807, indicating that log-in was not successful to said application server 105.

Upon receipt of said message 807, said application server determines whether said log-in was successful or not. In case said log-in was successful, said application server 105 may e.g. accept the creation of a new email address and/or update the link with the user identification. In case said log-in was not successful, said method ends.

After successful authentication, said application server 105 may send a message 808, Request, to said server 104, requesting additional user data, for example a home address or bank account data. Upon receipt of said message 808, said server 104 determines said user data, for example by look up in a user database. Said user data is then sent, by said server 104 in a message 809, Response, to said application server 105.

Upon receipt of said message 809, said application server 105 may store, e.g. cache, or use the said user data.

Additionally or alternatively, said application server 105 may send a message 810, Request, to said server 104, requesting to store additional data generated by said application server 105, as e.g. said new email address.

Upon receipt of said message 810, said server 104 stores said email address in said database and assigns it to said identification as a representation of said identification.

Additionally, said server 104 may be adapted to send a message, Acknowledge, to said server, confirming a successful update. Afterwards the method ends,

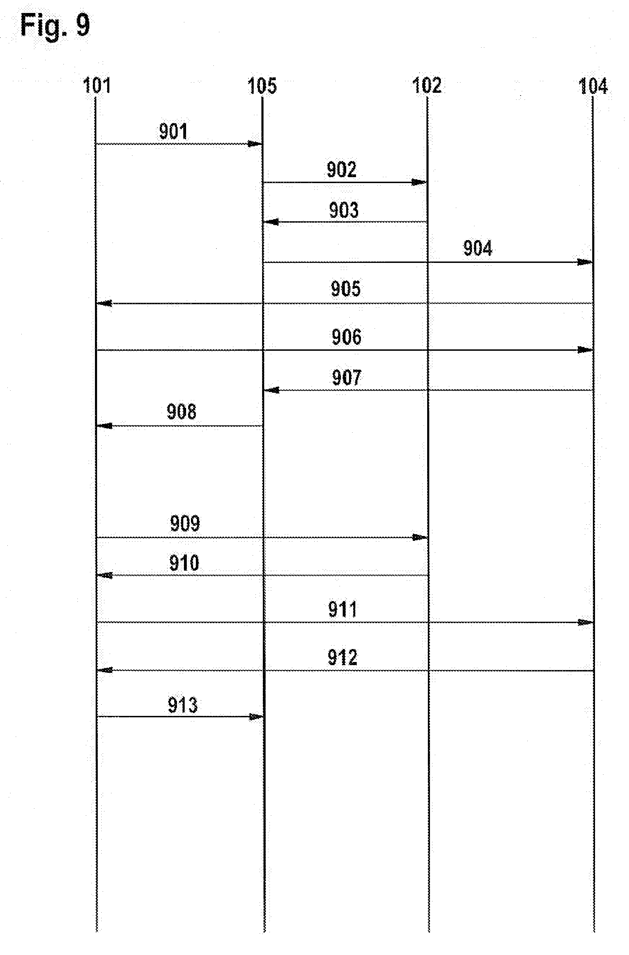

Fig. 9 schematically shows a fifth sequence diagram describing a method for logging into an application server, for example an email server and for using said application server, for example to send an email to an addressee identified by a personal identification.

Whenever a user of said email service wants to send an email to an addressee, said client 101 sends a message 901, Request, to request log-in to the application server 105. Said message 901 is determined by said client 101, based on input received from said user via said graphical user interface and comprises said identification of said user.

Upon receipt of said message 901, said application server 105 sends a message 902, Request, requesting said locator matching said identification, to said first proxy server 102.

Upon receipt of said message 902, said first proxy server determines whether said identification or said locator matching said identification is stored on said first proxy server 102.

In case no locator is stored on said first proxy server 102, said first proxy server 102 may send messages to other proxy servers in order to find said locator matching said identification.

If no locator matching said identification can be found, said first proxy server 102 sends a message 903, Response, indicating the result of the locator look-up to said application server 105. Otherwise it said locator is found, said locator, for example said Uniform Resource Locator, is sent in said message 903.

Upon receipt of said message 903, said application server 105 determines whether said locator has been found or not.

In case no locator has been found, said method ends. Otherwise said application server sends a message 904, Request, requesting log-in to said server 104. Said message 904 contains said client's address and said identification,

Upon receipt of said message 904, said server 104 sends a message 905, request, to request log-in data from said user to said client 111.

Upon receipt of said message 905, said client 101 presents said user with a graphical user interface requesting said log-in data. Upon receipt of input from said user, said client 101 sends a message 906, Response, containing said user input, for example a password to said server 104.

Said message 905 and said message 906 may be encrypted, for example using SSL-encryption.

Upon receipt of said message 906, said server 104 determines whether said log-in can be authenticated successfully. In case said authentication is successful, said server 104 sends a message 907, Response, to said application server 105, indicating successful log-in. Otherwise, said message 907 contains the result of the log-in, for example indicating that the log-in failed.

Upon receipt of said message 907, said application server 105 forwards said message 907 as a massage 908, indicating the result of said log-in to said client 101.

Upon receipt of said message 308, said client 101 presents the result of said log-in and requests user input for further processing from said user via said graphical user interface.

In case of a successful log-in, said client 101 presents said user for example a menu with options to send an email or to receive emails from said application server 105.

Upon user input, said client 101 determines whether said user chose the option to send a new email or the option to receive emails,

In case, said user chose the option to send a new email, said client 101 presents the user with an input field in order to receive an addressee's identification. Said addressee's identification is for example a real life name of said addressee.

Upon receipt of said user input, said client 101 sends a message 909, Request, to locate a representation, for example an email address of said addressee using said addressee's identification

Said message 909 contains said addressee's identification and is sent to said first proxy server 102.

Upon receipt of said message 909, said first proxy server 102 looks up said locator matching said addressee's identification. Afterwards, said first proxy server 102 sends a message 910, Response, containing the result of the look up.

Said message 910 for example contains a Uniform Resource Locator of said server 104 in case said locator matching said addressee's identification has been found. Otherwise said message 910 contains said first error message, indicating that no locator could be found.

Alternatively said message 910 may contain an address of any other server of similar type and functionality as said server 104. This way multiple providers having multiple servers of type and functionality similar to said server 104 May be used.

Upon receipt of said message 910, said client 101 sends a message 911, request, requesting a public email address of said addressee and optionally a public encryption key assigned to said addressee from said server 104.

Upon receipt of said message 911, said server 104 sends a message 912, Response, containing said public email address and optionally said public encryption key to said client 101.

Upon receipt of said message 912, said email address and optionally said public encryption key are stored on said client 101, for example temporarily until said user indicates via user input that said email has been written and should be sent to said addressee.

Upon receipt of input from said user, indicating that said email has been written and should be sent to said addressee, said client 101 reads said public email address and optionally said public encryption key as well as the content of said email, encrypts said email and sends it to said application server 105 via a message 913, Request, requesting to deliver said email to said addressee. Afterwards, said method ends.

Alternatively or additionally said messages 905 and 906 may be relayed through said application server 105 instead of sending them to said client 101 directly. Said messages may be encrypted, for example using SSL-encryption.

Alternatively or additionally to writing an email said client 101 may request download of new messages from the application server 105 after log-in. In this case, said application server 105 would send new emails to the client 101 in a message not depicted in Fig. 9.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the figures, including any functional blocks labeled as client or server, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term client or server should not be construed to refer exclusively to hardware capable of executing software, and may implicitly include, without limitation, digital processor (DSP) hardware, network processor, application specific integrated circuit (ASIC), field programmable gate array (FPGA) read only memory (ROM) for storing software, random access memory (RAM), and non volatile storage. Other hardware, conventional and/or custom, may also be included. Similarly, any data links shown in the figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any sequence diagram and the like represent various processes which may be substantially represented in computer readable medium and so executed by a computer or processor, whether or not such computer or processor is explicitly shown,

A person of skill in the art would readily recognize that steps of various above-described methods can be performed by programmed computers, Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for locating a representation, in particular representing a user of a service in a communications network, **wherein** a correlation between an identification, in particular uniquely identifying said user, and a locator, in particular identifying a storage location providing said representation, is determined and said representation is located (201, 202) depending on said locator.

2. The method according to claim 0, wherein a first message (201) containing said user identification is received, in particular by a first proxy server (102) from a client (101), and a second message (202) containing a result of said correlation is sent, in particular by said first proxy server (102) to said client (101).

3. The method according to claim 2, wherein said first message (201) is forwarded, in particular to a second proxy server (103), as a third message (401) in case no correlation is found, in particular on said first proxy server (102).

4. The method according to claim 2, wherein said second message (202) is sent, after a fourth message (402) is received, in particular by said first proxy server (102) from a second proxy server (103) or after a time-out event occurred.

5. The method according to claim 1, wherein a fifth message (601) containing said identification, in particular a request to register a new identification, is received, in particular by said server (104) from said client (101), and a sixth message (602), in particular a request to verify said identification, is sent by said server (104) to said first, proxy server (102).

6. A system for locating a representation, in particular representing a user of a service in a communications network (100), **wherein** a client (101), a server (104) providing said representation and a first proxy server (102) are connected to said communications network (100), said client (101) being adapted to send (201) an identification, in particular uniquely identifying said user, to said first proxy server (102), said first proxy server (102) being adapted to determine a correlation between said identification, and a locator, in particular identifying a storage location, in particular on said server (104), and said first proxy server (102) being adapted to send (202) said locator to said client (101), and said client being adapted to locate said representation depending on said locator.

7. A first proxy server (102) for locating a representation, in particular representing a user of a service in a communications network (100), **adapted to** determine a correlation between an identification, in particular uniquely identifying said user, and a locator, in particular identifying a storage location providing said representation.

8. A server (104) for locating a representation, in particular representing a user of a service in a communications network (100), **adapted** to receive a request (601) to register a new identification, in particular from a client (101), and adapted to send a request (602) to verify said identification, in particular to a first proxy server (102).

9. A client (101) for locating a representation, in particular representing a user of a service in a communications network (100), **adapted to** send (201) an identification, in particular uniquely identifying said user, to a first proxy server (102) and to locate said representation depending on a locator, in particular said locator being received from said first proxy server (102).

10. A client (101) for locating a representation, in particular representing a user of a service in a communications network (100), **adapted to** send a request (601) to register a new identification, in particular to a server (104).

11. A computer program for locating a representation, in particular representing a user of a service in a communications network, **wherein** said computer program, when executed on a computer, causes the computer to determine a correlation between an identification, in particular uniquely identifying said user, and a locator, in particular identifying a storage location providing said representation, and to locate said representation depending on said locator.

12. A computer program product for locating a representation, in particular representing a user of a service in a communications network, comprising a computer usable medium having a computer readable program, **wherein** said computer readable program, when executed on a computer, causes the computer to determine a correlation between an identification, in particular uniquely identifying said user, and a locator, in particular identifying a storage location providing said representation, and to locate said representation depending on said locator.
